# EUROPEAN PATENT SPECIFICATION

(11) **EP 2 975 825 B1**
(45) Date of publication and mention of the grant of the patent: **20.12.2017**
(21) Application number: 15175505.5
(22) Date of filing: 06.07.2015
(51) Int. Cl.: G06F 17/30, H04L 29/08

(54) **DIFFERENCE BASED CONTENT NETWORKING**
UNTERSCHIEDSBASIERTE INHALTSVERNETZUNG
MISE EN RÉSEAU DE CONTENU BASÉE SUR LA DIFFÉRENCE

(30) Priority: 17.07.2014 US 201414334509
(43) Date of publication of application: 20.01.2016
(73) Proprietor: Cisco Technology, Inc., San Jose, CA 95134 (US)
(72) Inventor: MOSKO, Marc E., Santa Cruz, CA 95060 (US)
(74) Representative: Kazi, Ilya

(56) References cited:
- EP-A2- 1 443 398
- US-A1- 2013 332 916
- US-A1- 2014 033 188

## Description

### BACKGROUND

### Field

The present disclosure relates generally to a content-centric network (CCN). More specifically, the present disclosure relates to a system and method for implementing difference-based content delivery.

### Related Art

The proliferation of the Internet and e-commerce continues to fuel revolutionary changes in the network industry. Today, a significant number of information exchanges, from online movie viewing to daily news delivery, retail sales, and instant messaging, are conducted online. An increasing number of Internet applications are also becoming mobile. However, the current Internet operates on a largely location-based addressing scheme. The two most ubiquitous protocols, Internet Protocol (IP) and Ethernet protocol, are both based on end-host addresses. That is, a consumer of content can only receive the content by explicitly requesting the content from an address (e.g., IP address or Ethernet media access control (MAC) address) that is typically associated with a physical object or location. This restrictive addressing scheme is becoming progressively more inadequate for meeting the ever-changing network demands.

Recently, information-centric network (ICN) architectures have been proposed in the industry where content is directly named and addressed. Content-Centric networking (CCN), an exemplary ICN architecture, brings a new approach to content transport. Instead of viewing network traffic at the application level as end-to-end conversations over which content travels, content is requested or returned based on its unique name, and the network is responsible for routing content from the provider to the consumer. Note that content includes data that can be transported in the communication system, including any form of data such as text, images, video, and/or audio. A consumer and a provider can be a person at a computer or an automated process inside or outside the CCN. A piece of content can refer to the entire content or a respective portion of the content. For example, a newspaper article might be represented by multiple pieces of content embodied as data packets. A piece of content can also be associated with metadata describing or augmenting the piece of content with information such as authentication data, creation date, content owner, etc.

In current CCNs, when a content publisher updates a piece of content, such as a video file, it needs to republish the entire content piece, often under a different version name, even the amount of change or edit can be small. Hence, when the recipient of the older version attempts to update the content piece, it needs to download the entire republished content piece, even only a small number of Content Objects were actually updated.

US 0214/0033188 A1 discloses a "Zero-Touch Manager" ("ZTM") that supplies updates to device firmware, operating system (OS), frameworks, applications, etc., from cloud-based or other network-accessible storage. These updates ensure that groups of "identical" devices (i.e., devices having the same hardware version) run from the same known state, while maintaining local customizations for individual devices. The ZTM uses sector-level differences to generate differential update versions ("diffs") of Virtual Hard Disk (VHD) images of planned update versions relative to local hard drive images of each device's current version. Consequently, updates to the local hard drive image are achieved by replacing sectors of the local hard drive image that have corresponding changed sectors in the diff, though additional information may also be included in the diff. "Manifest" files are used in combination with the diffs to control device updates based upon the current version of the local hard drive image relative to update versions in the diff.

US 2013/0332916 A1 discloses systems, methods, and non-transitory computer-readable storage media for updating software applications installed on client computing devices, creating a manifest file describing the differences between multiple versions of application archives present in an application distribution system, and coordinating an update process for updating the applications on the client computing devices are disclosed. It is disclosed that a scheme of hard-linking to existing files, downloading new files, and erasing unwanted files can be used.

EP 1443398 A2 discloses a method and system of validating a differential update to a computer system. One method includes comparing a list of files in a new computer system image with a list of files in a former computer system image to construct a manifest list of files comprising a subset of the new computer system images and the former computer system images. The method further includes associating information with the manifest list to facilitate determining whether a differential update comprising differences between the new computer system image and the former computer system image is valid. The method also includes comparing a list of files in a computer system to receive the differential update against the manifest list of files and using the associated information to determine if the differential update is valid for the computer system.

### SUMMARY

One embodiment of the present invention provides a method according to claim 1, a storage medium according to claim 2 and a system according to claim 3.

In a variation on this embodiment, the original manifest references the set of objects by their hash-based names.

In a further variation, the update manifest is difference encoded, indicating a difference to the original manifest, thereby facilitating construction of a newer manifest that references, by hash-based names, a set of Content Objects corresponding to the updated content piece.

In a further variation, the original manifest is hierarchical, and wherein the difference-encoded update manifest references unmodified branches of the original manifest hierarchy.

In a variation on this embodiment, the update objects include changes made to the content piece and corresponding byte locations of the changes within the content piece.

In a further variation, the byte locations of the changes are encoded in names of the update objects.

In a variation on this embodiment, the update objects include a set of modified objects and corresponding sequence numbers of the modified objects within the set of objects corresponding to the content piece.

In a further variation, the sequence numbers of the modified objects are encoded in names of the modified objects.

In a variation on this embodiment, the original manifest and/or the update manifest are cryptographically signed.

### BRIEF DESCRIPTION OF THE FIGURES

FIG. 1 illustrates an exemplary architecture of a network, in accordance with an embodiment of the present invention.
FIG. 2 presents a diagram illustrating the format of a manifest.
FIG. 3 presents a diagram illustrating an exemplary difference-based data-encoding scheme, in accordance with an embodiment of the present invention.
FIG. 4 presents a diagram illustrating an exemplary difference-based data-encoding scheme, in accordance with an embodiment of the present invention.
FIG. 5 presents a diagram illustrating an exemplary difference-based data-encoding scheme, in accordance with an embodiment of the present invention.
FIG. 6 presents a diagram illustrating an exemplary difference-based data-encoding scheme, in accordance with an embodiment of the present invention.
FIG. 7 presents a diagram illustrating an exemplary difference-based data-encoding scheme, in accordance with an embodiment of the present invention.
FIG. 8 presents a flowchart illustrating an exemplary process of content update that enables difference-based content delivery, in accordance with an embodiment of the present invention.
FIG. 9 presents a flowchart illustrating an exemplary process of downloading and constructing an updated content piece, in accordance with an embodiment of the present invention.
FIG. 10 illustrates an exemplary system that enables difference-based content networking, in accordance with an embodiment of the present invention.

In the figures, like reference numerals refer to the same figure elements.

### DETAILED DESCRIPTION

### Overview

Embodiments of the present invention provide a system and method for implementing difference-based content networking. More specifically, when a file is updated, instead of publishing the entire updated file, the publisher only publishes the difference, such that a recipient who has the older-version file in its local cache only needs to download the difference and is able to construct the updated file by applying the difference to the older-version file. In some embodiments, a manifest (also called a secure catalog or an aggregated signing object) can be used to facilitate the difference-based encoding. The manifest for the difference references an older version manifest and the difference objects. In some embodiments, the manifest itself can be difference-encoded.

In general, CCN uses two types of messages: Interests and Content Objects. An Interest carries the hierarchically structured variable-length identifier (HSVLI), also called the "name" or the "CCN name" of a Content Object and serves as a request for that object. If a network element (e.g., router) receives multiple Interests for the same name, it may aggregate those Interests. A network element along the path of the Interest with a matching Content Object may cache and return that object, satisfying the Interest. The Content Object follows the reverse path of the Interest to the origin(s) of the Interest. A Content Object contains, among other information, the same HSVLI, the object's payload, and cryptographic information used to bind the HSVLI to the payload.

The terms used in the present disclosure are generally defined as follows (but their interpretation is not limited to such):
"HSVLI:" Hierarchically structured variable-length identifier, also called a Name. It is an ordered list of Name Components, which may be variable length octet strings. In human-readable form, it can be represented in a format such as ccnx:/path/part. Also the HSVLI may not be human readable. As mentioned above, HSVLIs refer to content, and it is desirable that they be able to represent organizational structures for content and be at least partially meaningful to humans. An individual component of an HSVLI may have an arbitrary length. Furthermore, HSVLIs can have explicitly delimited components, can include any sequence of bytes, and are not limited to human-readable characters. A longest-prefix-match lookup is important in forwarding packets with HSVLIs. For example, an HSVLI indicating an Interest in "/parc/home/bob" will match both "/parc/home/bob/test.txt" and "/parc/home/bob/bar.txt." The longest match, in terms of the number of name components, is considered the best because it is the most specific. Detailed descriptions of the HSVLIs can be found in U.S. Patent No. 8,160,069, Attorney Docket No. PARC-20090115Q, entitled "SYSTEM FOR FORWARDING A PACKET WITH A HIERARCHICALLY STRUCTURED VARIABLE-LENGTH IDENTIFIER," by inventors Van L. Jacobson and James D. Thornton, filed 23 September 2009.
"Interest:" A request for a Content Object. The Interest specifies an HSVLI name prefix and other optional selectors that can be used to choose among multiple objects with the same name prefix. Any Content Object whose name matches the Interest name prefix (and optionally other requested parameters such as publisher key-ID match) satisfies the Interest.
"Content Object:" A data object sent in response to an Interest. It has an HSVLI name and a Content payload that are bound together via a cryptographic signature. Optionally, all Content Objects have an implicit terminal name component made up of the SHA-256 digest of the Content Object. In one embodiment, the implicit digest is not transferred on the wire, but is computed at each hop, if needed. Note that the Content Object is not the same as a content component or a content piece. A Content Object has a specifically defined structure under CCN protocol and its size is normally the size of a network packet (around 1500 bytes for wide area networks and 8000 bytes for local area networks and with fragmentation), whereas a content component is a general term used to refer to a file of any type, which can be an embedded object of a web page. For example, a web page may include a number of embedded objects, such as image, video files, or interactive components. Each embedded object is a content component or content piece and may span multiple Content Objects.

As mentioned before, an HSVLI indicates a piece of content, is hierarchically structured, and includes contiguous components ordered from a most general level to a most specific level. The length of a respective HSVLI is not fixed. In content-centric networks, unlike a conventional IP network, a packet may be identified by an HSVLI. For example, "abcd/bob/papers/ccn/news" could be the name of the content and identifies the corresponding packet(s), i.e., the "news" article from the "ccn" collection of papers for a user named "Bob" at the organization named "ABCD." To request a piece of content, a node expresses (e.g., broadcasts) an Interest in that content by the content's name. An Interest in a piece of content can be a query for the content according to the content's name or identifier. The content, if available in the network, is sent back from any node that stores the content to the requesting node. The routing infrastructure intelligently propagates the Interest to the prospective nodes that are likely to have the information and then carries available content back along the reverse path traversed by the Interest message. Essentially the Content Object follows the breadcrumbs left by the Interest message and thus reaches the requesting node.

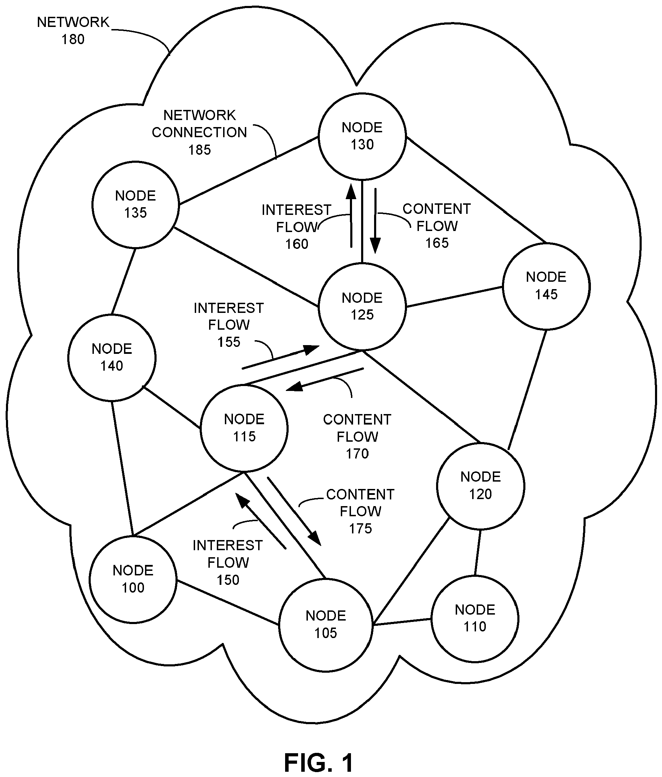

FIG. 1 illustrates an exemplary architecture of a network, in accordance with an embodiment of the present invention. In this example, a network 180 comprises nodes 100-145. Each node in the network is coupled to one or more other nodes. Network connection 185 is an example of such a connection. The network connection is shown as a solid line, but each line could also represent sub-networks or super-networks, which can couple one node to another node. Network 180 can be content-centric, a local network, a super-network, or a subnetwork. Each of these networks can be interconnected so that a node in one network can reach a node in other networks. The network connection can be broadband, wireless, telephonic, satellite, or any type of network connection. A node can be a computer system, an endpoint representing users, and/or a device that can generate Interest or originate content.

In accordance with an embodiment of the present invention, a consumer can generate an Interest for a piece of content and forward that Interest to a node in network 180. The piece of content can be stored at a node in network 180 by a publisher or content provider, who can be located inside or outside the network. For example, in FIG. 1, the Interest in a piece of content originates at node 105. If the content is not available at the node, the Interest flows to one or more nodes coupled to the first node. For example, in FIG.1, the Interest flows (Interest flow 150) to node 115, which does not have the content available. Next, the Interest flows (Interest flow 155) from node 115 to node 125, which again does not have the content. The Interest then flows (Interest flow 160) to node 130, which does have the content available. The flow of the Content Object then retraces its path in reverse (content flows 165, 170, and 175) until it reaches node 105, where the content is delivered. Other processes such as authentication can be involved in the flow of content.

In network 180, any number of intermediate nodes (nodes 100-145) in the path between a content holder (node 130) and the Interest generation node (node 105) can participate in caching local copies of the content as it travels across the network. Caching reduces the network load for a second subscriber located in proximity to other subscribers by implicitly sharing access to the locally cached content.

### The Manifest

In CCN, a manifest (sometimes called a secure catalog or an aggregated signing object) is used to represent a collection of data or a single piece of data. For example, a CCN node may contain a video collection that includes a large number of video files, and the manifest of the video collection can be an ordered list identifying the Content Objects corresponding to the video files. Alternatively, each video file may have its own manifest, which includes an ordered list identifying the Content Objects corresponding to the particular video file. Note that, due to the size limit of a Content Object, a video file often spans many Content Objects.

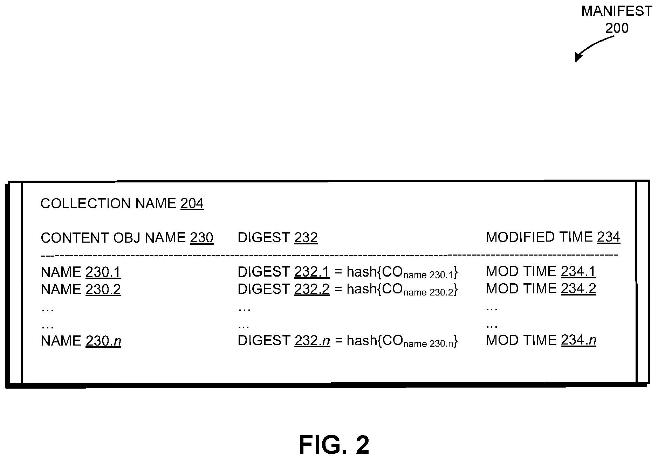

In the manifest, each Content Object is identified by its name and corresponding digest, where the digest is the hash value (often computed using a cryptographic hash function, such as hash function SHA-256) of the Content Object. In some embodiments, each Content Object is also identified by a modified time indicating the time that the content was last modified. FIG. 2 presents a diagram illustrating the format of a manifest.

In FIG. 2, manifest 200 includes an ordered list of Content Objects identified by a collection name 204 and one or more of the following: a Content Object name 230.1-230.n; a digest 232.1-232.n; and a modified time 234.1-234.*n*. The digests 232.1-232.n include a hash value of the Content Object identified respectively by names 230.1-230.*n*.

As shown in FIG. 2, manifest 200 can indicate a name and corresponding digest for each Content Object represented in the collection. Note that Content Objects representing different chunks of a file may have a same base name but different chunk numbers. Also shown in FIG. 2, manifest 200 can also include a modified time for each Content Object represented in the collection. The use of the modified time field depends on the underlying application or service being performed. Moreover, in addition to an ordered list, the manifest may also be structured as a synchronization tree, which contains content objects as well as nested collections of content objects.

In some embodiments, a manifest can be a signed Content Object with its payload being a well-formed structure, which can be JSON (JavaScript Object Notation) or TLV (type-length-value) encoded.

### The Difference-Based Content Networking

To reduce the amount of unnecessary data transfer in the event of a file update, embodiments of the present invention implement difference-based content networking (DBCN). More specifically, DBCN uses difference between versions to reduce the amount of data transfer, such that when a publisher publishes a new version of a content piece, instead of publishing the entire updated content piece, the system may only need to publish the difference. For example, when a user updates a 10 MB (mega-byte) video file with a 1 KB (kilo-byte) change, the system encodes the newly updated file as a combination of the original 10 MB file and the 1 KB difference file. Any remote user that already has the 10 MB original file now only needs to download the 1 KB difference file, and is able to construct the updated file using information contained in the 1 KB difference file and the 10 MB original file.

Similar to other versioned file systems, in DBCN, there is ground truth of the original content piece or file, and a series of differences. At some point, a new ground truth may be written to avoid needing a large number of differences. Depending on the implementation, different DBCN systems may have different strategies for writing new ground truth or consolidating differences to optimize content transfer.

To ensure secure and efficient distribution of content, CCN sometimes uses aggregated signing. More specifically, instead of signing each and every Content Object, a publisher can limit the cryptographic signing to an aggregated signing object (ASO), also called a secure catalog or a manifest. DBCN uses the manifest (or secure catalog) to efficiently encode version differences. In some embodiments, DBCN encodes version differences by referencing, in the manifest of the current version, the manifest of an earlier version, and then indicating the differences between the two versions. Therefore, a recipient can download the manifest of the new version, using information included in the manifest to obtain the previous version (either from its local cache or a content provider), and then apply the differences to the previous version. The version differences can be encoded in many different ways, including but not limited to: byte-range indication, byte-offset indication, Content Object indication based on sequence number, Content Object indication based on self-verifying name, and the manifest difference. For the byte-range indication implementation, the system identifies the byte ranges of the differences, and includes in the manifest of the newer version the identified byte ranges and corresponding new bytes. For the byte-offset indication implementation, each Content Object is labeled by its byte offset; and the manifest of the newer version references difference Content Objects labeled by their byte offset, indicating where to place the difference Content Objects in the previous version. For the Content Object indication, the system identifies the sequence numbers of modified Content Objects, and includes in the manifest of the newer version the identified Content Object sequence numbers and new Content Objects. For the implementation that based on self-verifying names of Content Objects, the manifest of each version lists the self-verifying names (hashes) of each Content Object; and differences between those self-verifying names indicate version differences. For the manifest-difference implementation, the manifest itself is difference encoded.

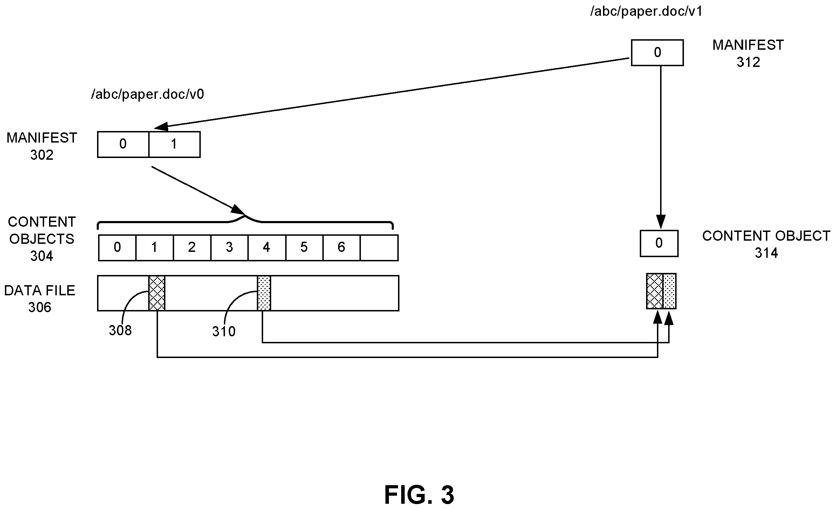

FIG. 3 presents a diagram illustrating an exemplary difference-based data-encoding scheme, in accordance with an embodiment of the present invention. In FIG. 3, a data file 306 (which can represent any types of content, such as binary, text, image, video, audio, etc.) can be partitioned into a number of chunks, and each chunk makes the payload a CCN Content Object. In the example shown in FIG. 3, a set of Content Objects 304 includes eight Content Objects, collectively corresponding to data file 306, which can be a text document (paper.doc). In some embodiments, data file 306 is partitioned into chunks of the same size, with each chunk fitting into a standard Content Object. In some embodiments, the system can use a data de-duplication technology to break up data file 306 into chunks, such that the payload of each Content Object is an output of the data de-duplication algorithm. Note that the chunk size may vary from 1500 bytes to 64 KB, depending on the data and the de-duplication technology used. Note that, if larger chunk sizes are used, the system may need in-network fragmentation. Therefore, the larger chunk sizes are less desirable if there is a high packet loss rate.

In the example shown in FIG. 3, like conventional CCN systems, each Content Object is named with its sequence number. More specifically, the Content Objects have a same CCN base name followed by a version number then followed by the sequence number. For example, the first Content Object can have a CCN name as "/abc/paper.doc/v0/s0," with "/abc/paper.doc" being the CCN base name, v0 indicating version 0, and s0 indicating that this Content Object is the first chunk.

To enable DBCN, in some embodiments, the system generates a manifest 302 for set of Content Objects 304. The name of manifest 302 can be the CCN base name, such as "/abc/paper.doc/v0," with v0 indicating that this manifest is the manifest of the first version. In CCN, each Content Object has an implicit Content Object hash, which can be the SHA-256 hash of the Content Object. Generating Content Object hashes allows exact retrieval of a matching Content Object with cryptographic verification that the retrieved Content Object is the desired Content Object. In some embodiments, manifest 302 enumerates, in order, the Content Object hash of each constituent Content Object. Therefore, a node can request data file 306 by requesting manifest 302, which can include one or more Content Object hashes. Once the node downloads manifest 302, it can retrieve each Content Object individually based on its Content Object hash. Moreover, if manifest 302 includes a publisher generated signature, the receiving node can authenticate all retrieved Content Objects by verifying the signature of manifest 302.

When the publisher updates data file 306 by making changes at segments 308 and 310, the publisher generates a set of difference Content Objects 314 and an update manifest 312 (may have a name "/abc/paper.doc/v1") for the generated difference Content Objects. The publisher can then publish the new version by publishing update manifest 312 and set of difference Content Objects 314. In some embodiments, set of difference Content Objects 314 includes a structured list of binary differences from version 0 to version 1, such that one could "patch" the older version to get the newer version. Note that, here the term "binary differences" means measuring the byte location of a difference and indicating the new bytes (which can be more or less than the original bytes) that replace the old byes. For text-based data, the system can use a standard text difference. In some embodiments, set of difference Content Objects 314 includes byte-range information of the changes (such as segments 308 and 310) and new bytes that are used to replace old bytes specified by the byte range. For example, segment 308 may start from the 5K byte location and end at the 6K byte location, indicating a change of 1K data. Accordingly, set of difference Content Objects 314 includes an entry that specifies the 5k-6K byte range and any bytes that are to be inserted between the 5K and 6K byte locations in data file 306. Depending on the amount of change incurred, set of difference Content Objects 314 may include one or more Content Objects. Note that these difference Content Objects can have sequential names, such as "/abc/paper.doc/v1/s0" and "/abc/paper.doc/v1/s1," with v1 indicating version 1 and s0/s1 indicating the chunk serial number of each difference Content Object. In the example shown in FIG. 3, the binary difference between versions is contained in one Content Object.

In some embodiments, the update manifest enumerates the Content Object hashes of the difference Content Objects, such that signing the update manifest alone enables authentication of all difference Content Objects.

Like a conventional manifest, update manifest 312 includes references to its constituent Content Objects, which include set of difference Content Objects 314. Moreover, update manifest 312 includes a reference to original manifest 302. Hence, if a node already has the older version file in its cache, it only needs to download the update, meaning downloading update manifest 312 and set of difference Content Objects 314. Based on information included in update manifest 312, the node can locate original manifest 302 and thus set of Content Objects 304, and then apply differences included in set of difference Content Objects 314 to original set of Content Objects 304 to get the newer version file. If a node does not have the older version file, it can first retrieve the older file using original manifest 302, and then apply differences.

The advantage of this byte-range indication scheme is that the difference Content Objects contain only the difference bytes and the annotations that describe where those differences occur in the previous version. No additional duplicated data is included in the difference Content Objects. However, the amount of overhead can be high if there are many discontinuous changes. Note that if the changes include byte insertions, they can cause a right-shift of the Content Object. On the other hand, for deletion operation, one can easily elide these bytes using a single empty Content Object.

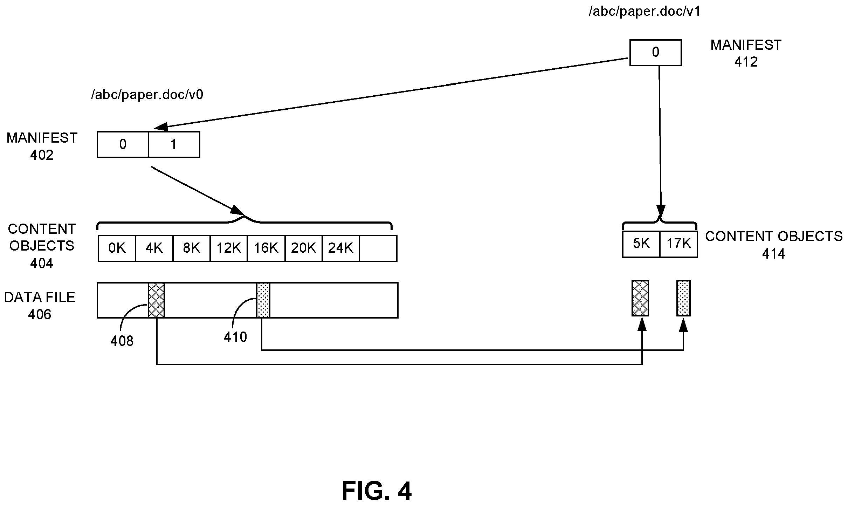

FIG. 4 presents a diagram illustrating an exemplary difference-based data-encoding scheme, in accordance with an embodiment of the present invention. Like FIG. 3, in FIG. 4, a data file 406 is broken into many chunks that make up the payloads of a set of Content Objects 404. However, unlike FIG. 3, in the example shown in FIG. 4, set of Content Objects 404 are not named with sequence numbers, instead, they are named with their byte offsets. In other words, a Content Object is named based on the byte location of its first byte. For example, the first Content Object has a zero byte offset, and its CCN name can be "/abc/paper.doc/v0/0K." In FIG. 4, manifest 402 is similar to manifest 302, and it includes a list of Content Object hashes for set of Content Objects 404.

Like manifest 312 in FIG. 3, update manifest 412 ("/abc/paper.com/v1") references original manifest 402 and a set of difference Content Objects 414. However, unlike in FIG. 3 where difference Content Objects are named with their chunk numbers, in FIG. 4, the difference Content Objects are named with their byte offsets, which indicate where the bytes included in each difference Content Object should be placed in the previous version. For example, in FIG. 4, a change occurs at a segment 408 in data file 406, and the bye offset for segment 408 is 5KB. Accordingly, a difference Content Object that contain bytes that are to be inserted at the 5KB location of data file 406 will be named "/abc/paper.doc/v1/5K," with v1 indicating version 1 and 5kB indicating the byte offset of bytes carried by this Content Object. Similarly, a Content Object containing bytes that are to be inserted at the 17KB location (segment 410) in data file 406 can be named "/abc/paper.doc/v1/17K." In some embodiments, the payload of each difference Content Object also includes information that indicates whether the difference Content Object represents an "insert," or a "replace," or a "deletion" operation. It is easily understandable that for the "deletion" operation, a corresponding Content Object can be empty.

In the example shown in FIG. 4, the construction process of the newer version file is similar to the one shown in FIG. 3. In some embodiments, when there are multiple coexist versions, a node can construct a version by perform a post-order traversal of the manifest tree and maintaining an interval graph of the data file. This file constructing process can be complicated because each time one needs to construct a version from its immediate previous version. When the number of versions is large, this can be a cumbersome process.

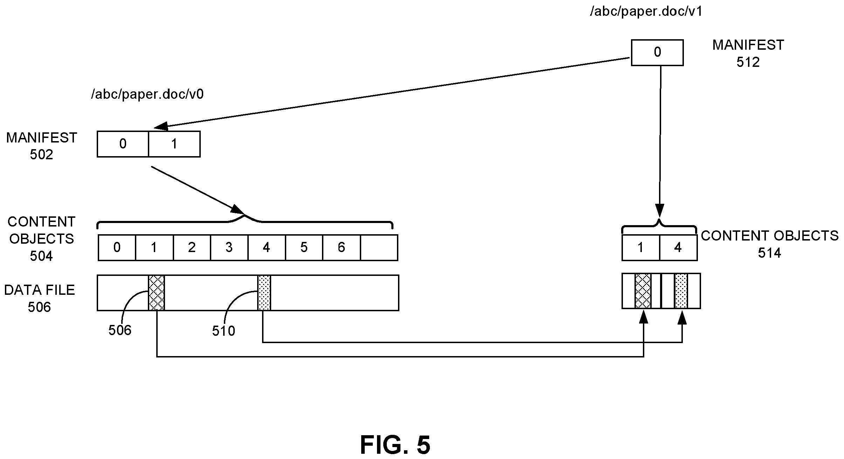

FIG. 5 presents a diagram illustrating an exemplary difference-based data-encoding scheme, in accordance with an embodiment of the present invention. Like what shown in FIG. 3, in FIG. 5, a data file 506 is broken into many chunks that make up the payload of a set of Content Objects 504, and these Content Objects are named with their chunk numbers. Also like manifest 302 shown in FIG. 3, manifest 502 includes a list of Content Object hashes for set of Content Objects 504. Like manifest 312 shown in FIG. 3, update manifest 512 ("/abc/paper.com/v1") references original manifest 502 and a set of difference Content Objects 514. However, unlike what shown in FIG. 3, in FIG. 5, set of difference Content Objects 514 does not include byte range information of changes. Instead, set of difference Content Objects 514 includes Content Objects that can be used to swap modified Content Objects in the old file. More specifically, if a change occurs at a particular Content Object, the publisher generates a new Content Object that can be used to replace the original Content Object. In the example shown in FIG. 5, a change occurs at segment 508, which corresponds to a Content Object with a sequence number one (chunk 1); and another changes occurs at segment 510, which corresponds to chunk 4. Accordingly, when updating data file 506, the publisher generates two difference Content Objects, which can be used to replace chunks 1 and 4 of the previous version. Note that the difference Content Objects are named with the chunk numbers of the Content Objects that they intend to replace.

When there are many coexist versions, a node can construct a version by performing a post-order traversal of the manifest tree, and only uses the right-most occurrence of a Content Object sequence number.

This Content Object sequence number based difference encoding mechanism can be easy to implement, because there is no need to compute the byte ranges. Moreover, constructing files of different versions can be easier because one only needs to know the difference between versions at the Content Object level. However, because the difference in now encoded at the Content Object level, each Content Object needs to contain all the bytes that replace the previous Content Object, which can incur unnecessary data duplication. For example, even if only a small number of bytes (such as 128 bytes) are changed in a Content Object, which can be 8 KB large, all 8KB bytes in the new version needs to be included in the replacement Content Object. This can result in roughly 7.9KB of duplicated data.

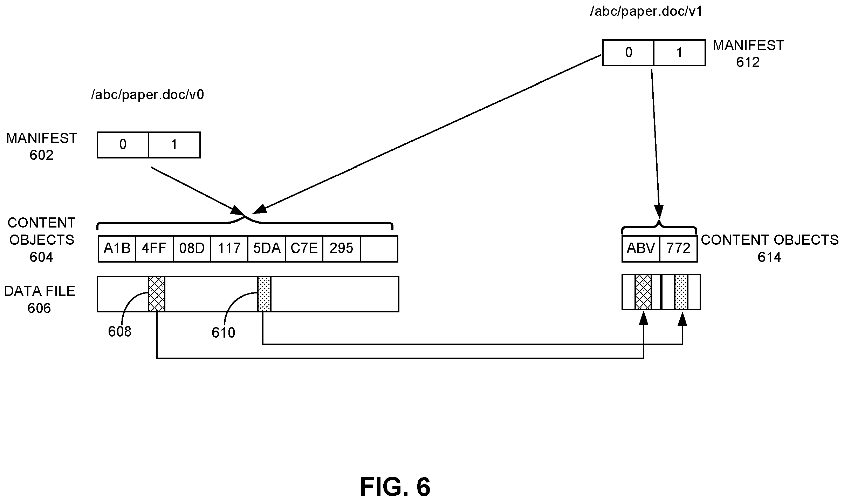

FIG. 6 presents a diagram illustrating an exemplary difference-based data-encoding scheme, in accordance with an embodiment of the present invention. In FIG. 6, a data file 606 is broken into many chunks that make up the payloads of a set of Content Objects 604. In some embodiments, the chunks can be the output of a data de-duplication mechanism, and can have variable sizes, ranging from 4 KB to 16 KB. However, unlike FIG. 3, in the example shown in FIG. 6, set of Content Objects 604 are not named with their sequence numbers, instead, they are given self-verifying hash-based names. In other words, each Content Object is named by its cryptographic hash. Note that, in the example shown in FIG. 6, the hash values are shortened for the ease of display. In practice, they include much longer (such as 32-byte) strings. In some embodiments, each Content Object is named with its SHA-256 digest. In some embodiments, due to their uniqueness, the Content Objects for the same content piece are kept under the same namespace, such that a Content Object can be named as "/abc/paper.doc/<chunk_hash>." Note that there is no mentioning of version numbers and chunks from all different versions are kept under the same namespace. In different embodiments, all chunks may be kept under a higher-level chunk repository, such as "/abc/<chunk_hash>."

Like manifest 302 shown in FIG. 3, a manifest 602 enumerates, in order, Content Object hashes for set of Content Objects 604. Although the chunk names are not versioned, manifest 602 is given a versioned name, such as "/abc/paper.doc/v0," with v0 indicating version 0. Note that entries in manifest 602 only need to reference the Content Objects to the extent needed to find them. For example, if the system stores the chunks under "/abc/paper.doc," manifest 602 can state this in one place (such as the entry for the first chunk); then the remainder entries are just the 32-byte hash names.

When the publisher updates data file 606 by making changes at segments 608 and 610, the publisher generates a new set of Content Objects for the updated file. The new set of Content Objects includes all the unchanged Content Objects in the original set of Content Objects 604 and a set of difference Content Objects 614. Note that, as discussed previously, all Content Objects are placed under the same namespace, without mentioning of version number. The publisher also generates a manifest 612 (/abc/paper.doc/v1) for the new set of Content Objects. Like manifest 602, manifest 612 enumerates Content Object hashes of the new set of Content Objects, which include hashes of the unchanged Content Objects (such as A1B, 08D, 117, C7E, 295, and 093) and hashes of the difference Content Objects (such as ABD and 772). Note that, different from schemes shown in FIGs. 3-5, in the current scheme, instead of referencing an older version manifest, manifest 612 directly references the unchanged Content Objects of the older version. A recipient node that already has original set of Content Objects 604 can download manifest 612 and set of difference Content Objects 614. Because manifest 612 enumerates Content Object hashes in order, the recipient node can construct the newer version file by placing the difference Content Objects into appropriate locations. For a node that does not have original set of Content Objects 604, it can download the entire new set of Content Objects using the Content Object hashes included in manifest 612.

The advantage of this hash-name based scheme is that the manifest of the newer version no longer needs to reference the manifest of an older version. However, the manifest itself becomes larger because it needs to enumerate Content Object hashes of all chunks.

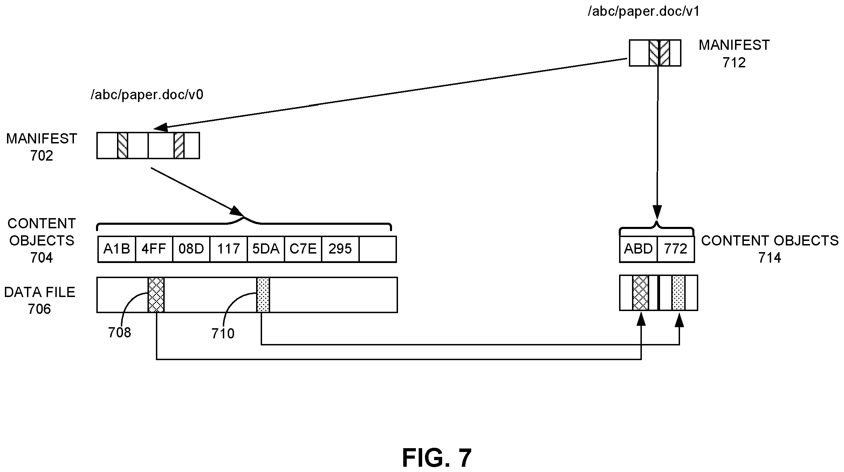

FIG. 7 presents a diagram illustrating an exemplary difference-based data-encoding scheme, in accordance with an embodiment of the present invention. Like the example shown FIG. 6, in FIG. 7, a data file 706 is broken into many chunks that make up the payload of a set of Content Objects 704. Also like the example shown in FIG. 6, the Content Objects are named with their cryptographic hash names. Like manifest 602 shown in FIG. 6, a manifest 702 (/abc/paper.doc/v0) enumerates, in order, Content Object hashes for set of Content Objects 704. Note that the Content Object hash of a Content Object can include a SHA-256 hash of the Content Object.

Like the example shown in FIG. 6, when the publisher updates data file 706 by making changes at segments 708 and 710, the publisher generates a new set of Content Objects for the updated file. The new set of Content Objects includes the unchanged Content Objects in the original set of Content Objects 704 and a set of difference Content Objects 714. However, unlike FIG. 6, the publisher now generates an update manifest 712, which is different from manifest 612. More specifically, update manifest 712 itself is difference-encoded by including a difference to original manifest 702 and a reference to original manifest 702. In other words, instead of enumerating Content Object hashes for all Content Objects in the new set, update manifest 712 may specify how to make changes to original manifest 702. For example, update manifest 712 may state deletion of Content Object hashes 4FF and 5DA (corresponding to segments 708 and 710) and insertion of Content Object hashes ABD and 772 (corresponding to set of difference Content Objects 714). Note that various difference-encoding schemes (which can be similar to the schemes shown in FIGs. 3-6) can be used to generate update manifest 712.

In order to construct the updated data file, a recipient node first downloads update manifest 712, which references original manifest 702 and set of difference Content Objects 714. The recipient node then downloads original manifest (if it does not have it) and set of difference Content Objects 714. Subsequently, based on update manifest 712 and original manifest 702, the recipient node can construct a new manifest (not shown in FIG. 7), which is similar to manifest 602 and enumerates Content Objects hashes of Content Objects representing the updated data file. Based on the new manifest, the recipient node can construct the newer version file by placing the difference Content Objects into appropriate locations of the older version file. In some embodiments, the recipient node can skip the construction of the new manifest, and deduct how to arrange the difference Content Objects based on information included in update manifest 712.

The advantage of using difference-encoded update manifest is that it ensures that manifests of later versions remain compact, which in turn can significantly reduce the amount of data needed to be transferred over the network when content update occurs. Moreover, like the example shown in FIG. 6, enumerating the Content Object hashes allows easy insertion or removal of chunks.

In some embodiments, manifest 702 can be hierarchical and includes a number of hierarchical pieces. In such situations, update manifest 712 can incorporate unchanged branches of the hierarchy of original manifest 702 by reference without the need of re-enumerating those unchanged branch pieces.

In the example shown in FIG. 7, only two versions exist. In practice, many different versions of a same file may co-exist. The update manifest of a later version does not need to point solely to the immediate previous version manifest. In some embodiments, the update manifest of a later version can reference to any number of earlier versions and indicate difference to those versions. For example, a version 10 update manifest may reference version 4 update manifest and indicate the difference (in forms of difference Content Objects) between these two versions. In a different example, version 10 update manifest may reference version 7 update manifest, which in turn references version 4 update manifest. One can construct a manifest for the final version file via a post-order traversal of the manifest tree.

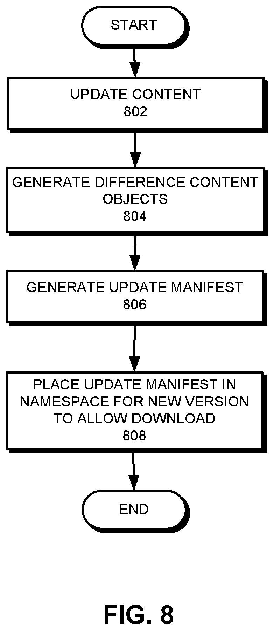

FIG. 8 presents a flowchart illustrating an exemplary process of content update that enables difference-based content delivery, in accordance with an embodiment of the present invention. During operation, a content publisher updates a content piece, which can be a data file of any types (operation 802). Note that, because the data file has been chunked to fit into a number of Content Objects, updating the data file often involves updating a subset of the Content Objects while leaving remaining Content Objects unchanged. Depending on the DBCN scheme, in some embodiments, the Content Objects are named according to their sequence numbers. In some embodiments, the Content Objects are named according to the byte-offset of each Content Object. In some embodiments, the Content Objects are named based on their cryptographic hash names.

The publisher then generates a set of difference Content Objects based on the update (operation 804). Note that, depending on the DBCN scheme, in some embodiments, generating the difference Content Objects may involve extracting byte locations of the differences, which can be results of insertion, deletion, or replacement operations. Also depending on the DBCN scheme, the difference Content Objects can be named based on their sequence numbers, sequence numbers of the to-be-replaced Content Objects, byte offset of the difference, or the cryptographic hash names of the difference Content Objects. For byte-level difference encoding, the difference Content Objects may contain only difference bytes between two versions. However, the byte locations or ranges of the differences need to be specified. For Content Object level difference encoding, a difference Content Object needs to contain all the bytes used to replace a previous Content Object. The location of the difference Content Objects can be encoded in their name, either as their byte offset or as the sequence number of the to-be-replaced chunks.

Subsequently, the publisher generates an update manifest for the difference Content Objects (operation 806). The update manifest usually references the previous version manifest and the difference Content Objects. The only exception is that, when the update manifest lists the cryptograph hashes of the entire new set of Content Objects (including unchanged Content Objects), the update manifest no longer needs to explicitly reference the previous version manifest. The publisher places the update manifest and/or the difference Content Objects under a namespace for the newer version (operation 808), such that a node attempts to download the newer version file can download the update manifest and then uses the update manifest to fetch needed Content Objects. Note that if the node already has the older version file in its cache, it only needs to download the difference Content Objects.

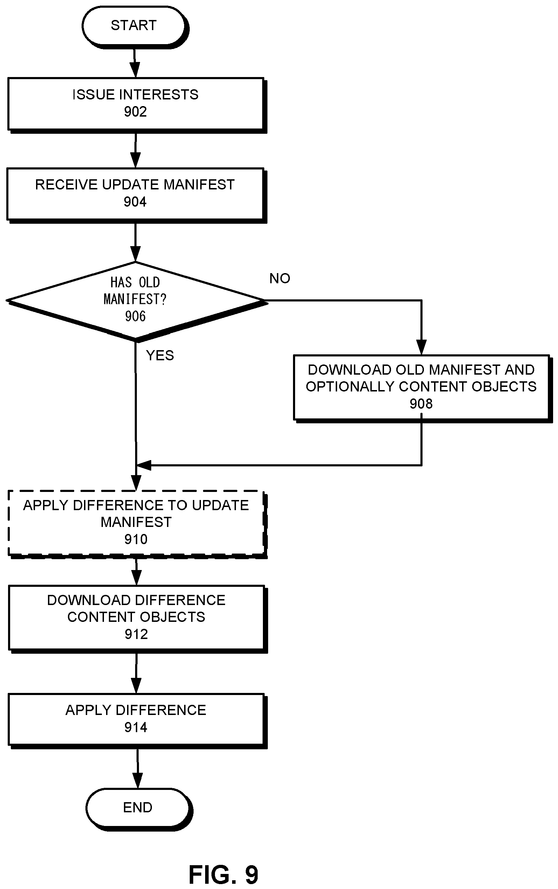

FIG. 9 presents a flowchart illustrating an exemplary process of downloading and constructing an updated content piece, in accordance with an embodiment of the present invention. During operation, a node starts to download an updated version of a content piece by issuing an initial set of Interests under the namespace of the newer version (operation 902). In response, the node receives the update manifest (operation 904). In some embodiments, the update manifest includes a reference to a previous version manifest and references to a set of difference Content Objects. In some embodiments, the update manifest includes a reference to a previous version manifest and indicates a difference to the previous version manifest. In some embodiments, the update manifest is cryptographically signed such that a verification of its signature authenticates all following difference Content Objects. The node determines if it has the previous version manifest (operation 906). If not, the node downloads the previous version manifest and optionally along with Content Objects corresponding to the previous version (operation 908). Note that, if the Content Objects use hash-based names and the manifest lists all Content Object hashes, the node can delay downloading of the older version Content Objects. The node then optionally applies the difference to the update manifest to obtain a manifest (operation 910). Note that this only applies to the difference-encoded manifest. The node subsequently downloads the difference Content Objects (operation 912), and applies the difference to the previous version Content Objects (operation 914). In some embodiments, applying the difference involves making changes at specific byte ranges (as specified by the difference Content Objects). In some embodiments, applying the difference involves replacing certain Content Objects with the difference Content Objects (which can be empty for a deletion operation). In some embodiments, applying the difference can involve downloading the unchanged Content Objects (if it does not have them in the local cache) and the difference Content Objects, with the difference Content Objects being placed at appropriated locations.

### Computer and Communication System

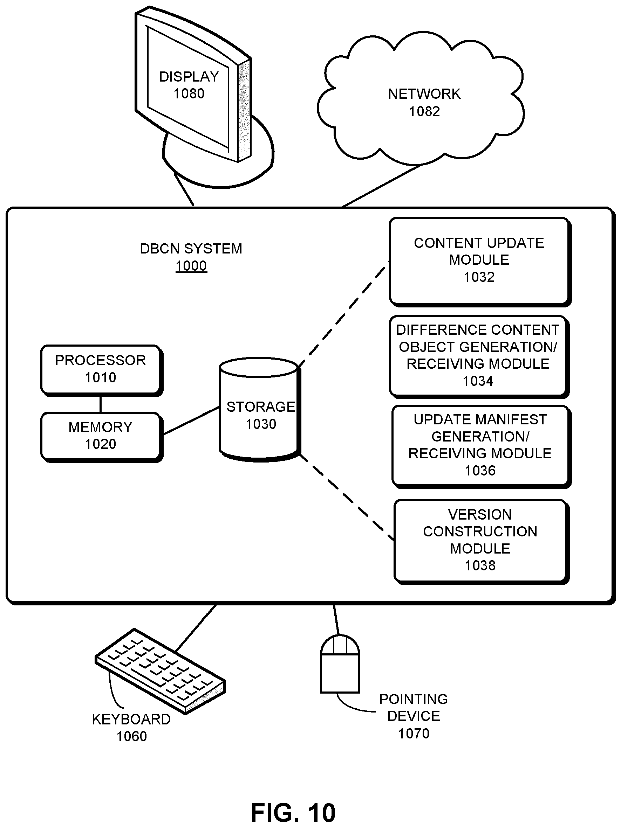

FIG. 10 illustrates an exemplary system that enables difference-based content networking, in accordance with an embodiment of the present invention. A DBCN system 1000 comprises a processor 1010, a memory 1020, and a storage 1030. Storage 1030 typically stores instructions that can be loaded into memory 1020 and executed by processor 1010 to perform the methods mentioned above. In one embodiment, the instructions in storage 1030 can implement a content update module 1032, a difference Content Object generation/receiving module 1034, an update manifest generation/receiving module 1036, and a version-construction module 1038, all of which can be in communication with each other through various means.

In some embodiments, modules 1032, 1034, 1036, and 1038 can be partially or entirely implemented in hardware and can be part of processor 1010. Further, in some embodiments, the system may not include a separate processor and memory. Instead, in addition to performing their specific tasks, modules 1032, 1034, 1036, and 1038, either separately or in concert, may be part of general- or special-purpose computation engines.

Storage 1030 stores programs to be executed by processor 1010. Specifically, storage 1030 stores a program that implements a system (application) for enabling DBCN. During operation, the application program can be loaded from storage 1030 into memory 1020 and executed by processor 1010. As a result, DBCN system 1000 can perform the functions described above. DBCN system 1000 can be coupled to an optional display 1080 (which can be a touch screen display), keyboard 1060, and pointing device 1070, and can also be coupled via one or more network interfaces to network 1082.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, methods and processes described herein can be included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

The above description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the scope of the present disclosure. Thus, the present invention is not limited to the embodiments shown, but is to be accorded the widest scope consistent with the principles and features disclosed herein.

## Claims

1. A method for updating a content piece and delivering the updated content piece over a content-centric network, CCN, (180), comprising:
updating (802) the content piece which corresponds to an original manifest (200) and a set of standard CCN content Objects referenced by the original manifest;
generating (804, 806) an update manifest for the updated content piece, wherein the update manifest includes a reference to the original manifest and a reference to a set of update standard CCN Content Objects, wherein the set of update CCN Content Objects indicates differences between the content piece and the updated content piece; and
publishing (808) the update manifest and the set of update standard CCN Content Objects by storing the update manifest and the set of update standard CCN Content Objects at a node in the CCN network, thereby facilitating a requester for the updated content piece to retrieve the update manifest and the set of update standard CCN Content Objects and to construct the updated content piece using the update manifest and the set of update standard CCN Content Objects.

2. A non-transitory computer-readable storage medium (1030) storing instructions that when executed by a computing device cause the computing device to perform the method according to claim 1.

3. A computer system (1000) for updating a content piece and delivering the updated content piece over a content-centric network, CCN, (180), the system comprising:
a processor (1010); and
a storage device (1030) coupled to the processor and storing instructions which when executed by the processor cause the processor to perform a method, the method comprising:
updating (802) the content piece which corresponds to an original manifest (200) and a set of standard CCN Content Objects referenced by the original manifest;
generating (804, 806) an update manifest for the updated content piece, wherein the update manifest includes a reference to the original manifest and a reference to a set of update standard CCN Content Objects, wherein the set of update standard CCN Content Objects indicates differences between the content piece and the updated content piece; and
publishing (808) the update manifest and the set of update standard CCN Content Objects by storing the update manifest and the set of update standard CCN Content Objects at a node in the CCN network, thereby facilitating a requester for the updated content piece to retrieve the update manifest and the set of update standard CCN Content Objects and to construct the updated content piece using the update manifest and the set of update objects.

4. The system (1000) of claim 3, wherein the original manifest (200) references the set of standard CCN Content Objects by their hash-based names.

5. The system (1000) of claim 4, wherein the update manifest is difference encoded, indicating a difference to the original manifest (200) to construct a newer manifest that references, by hash-based names, a set of Content Objects corresponding to the updated content piece.

6. The system (1000) of claim 5, wherein the original manifest (200) is hierarchical, and wherein the difference-encoded update manifest references unmodified branches of the original manifest hierarchy.

7. The system (1000) of claim 3, wherein the update standard CCN Content Objects include changes made to the content piece and corresponding byte locations of the changes within the content piece.

8. The system (1000) of claim 3, wherein the update standard CCN Content Objects include a set of modified standard CCN Content Objects and corresponding sequence numbers of the modified standard CCN Content Objects within the set of standard CCN Content Objects corresponding to the content piece.

9. The system (1000) of claim 3, wherein at least one Content Object in the single content stream includes key information, and wherein a respective Content Object includes a cryptographic signature associated with the key.

10. A method according to claim 1 further comprising a requester retrieving the update manifest and the update standard CCN Content Objects and constructing the updated content piece using the update manifest and a set of update standard CCN Content Objects.

11. A system comprising the computer system of claim 3 and a requester node (105) configured to retrieve the update manifest and the set of update standard CCN Content Objects and to construct the updated content piece using the update manifest and the set of update standard CCN Content Objects.

## Patentansprüche

1. Verfahren zum Aktualisieren eines Inhaltselements und zum Liefern des aktualisierten Inhaltselements über ein inhaltszentriertes Netzwerk CCN (180), wobei das Verfahren Folgendes umfasst:
Aktualisieren (802) des Inhaltselements, das einem ursprünglichen Manifest (200) und einem Satz von Standard-CCN-Inhaltsobjekten, auf die das ursprüngliche Manifest Bezug nimmt, entspricht;
Erzeugen (804, 806) eines Aktualisierungsmanifests für das aktualisierte Inhaltselement, wobei das Aktualisierungsmanifest eine Referenz auf das ursprüngliche Manifest und eine Referenz auf einen Satz von Aktualisierungsstandard-CCN-Inhaltsobjekten umfasst, wobei der Satz von Aktualisierungs-CCN-Inhaltsobjekten Unterschiede zwischen dem Inhaltselement und dem aktualisierten Inhaltselement angibt; und
Veröffentlichen (808) des Aktualisierungsmanifests und des Satzes von Aktualisierungsstandard-CCN-Inhaltsobjekten durch Speichern des Aktualisierungsmanifests und des Satzes von Aktualisierungsstandard-CCN-Inhaltsobjekten an einem Knoten in dem CCN-Netzwerk, wodurch ein Anforderer für das aktualisierte Inhaltselement das Aktualisierungsmanifest und den Satz von Aktualisierungsstandard-CCN-Inhaltsobjekten abrufen und das aktualisierte Inhaltselement unter Verwendung des Aktualisierungsmanifests und des Satzes von Aktualisierungsstandard-CCN-Inhaltsobjekten erstellen kann.

2. Nicht-flüchtiges computerlesbares Speichermedium (1030), das Befehle speichert, die, wenn sie von einer Computervorrichtung ausgeführt werden, bewirken, dass die Computervorrichtung das Verfahren nach Anspruch 1 durchführt.

3. Computersystem (1000) zum Aktualisieren eines Inhaltselements und zum Liefern des aktualisierten Inhaltselements über ein inhaltszentriertes Netzwerk CCN (180), wobei das System Folgendes umfasst:
einen Prozessor (1010); und
eine Speichervorrichtung (1030), die mit dem Prozessor gekoppelt ist und Befehle speichert, die, wenn sie durch den Prozessor ausgeführt werden, den Prozessor veranlassen, ein Verfahren durchzuführen, wobei das Verfahren Folgendes umfasst:
Aktualisieren (802) des Inhaltselements, das einem ursprünglichen Manifest (200) und einem Satz von Standard-CCN-Inhaltsobjekten, auf die das ursprüngliche Manifest Bezug nimmt, entspricht;
Erzeugen (804, 806) eines Aktualisierungsmanifests für das aktualisierte Inhaltselement, wobei das Aktualisierungsmanifest eine Referenz auf das ursprüngliche Manifest und eine Referenz auf einen Satz von Aktualisierungsstandard-CCN-Inhaltsobjekten umfasst, wobei der Satz von Aktualisierungsstandard-CCN-Inhaltsobjekten Unterschiede zwischen dem Inhaltselement und dem aktualisierten Inhaltselement angibt; und
Veröffentlichen (808) des Aktualisierungsmanifests und des Satzes von Aktualisierungsstandard-CCN-Inhaltsobjekten durch Speichern des Aktualisierungsmanifests und des Satzes von Aktualisierungsstandard-CCN-Inhaltsobjekten an einem Knoten in dem CCN-Netzwerk, wodurch ein Anforderer für das aktualisierte Inhaltselement das Aktualisierungsmanifest und den Satz von Aktualisierungsstandard-CCN-Inhaltsobjekten abrufen und das aktualisierte Inhaltselement unter Verwendung des Aktualisierungsmanifests und des Satzes von Aktualisierungsobjekten erstellen kann.

4. System (1000) nach Anspruch 3, wobei das ursprüngliche Manifest (200) auf den Satz von Standard-CCN-Inhaltsobjekten durch ihre Hash-basierten Namen verweist.

5. System (1000) nach Anspruch 4, wobei das Aktualisierungsmanifest differenzcodiert ist und einen Unterschied zum ursprünglichen Manifest (200) angibt, um ein neuere Manifest zu konstruieren, die durch Hash-basierte Namen auf einen Satz von Inhaltsobjekten verweist, die dem aktualisierten Inhaltselement entsprechen.

6. System (1000) nach Anspruch 5, wobei das ursprüngliche Manifest (200) hierarchisch ist und wobei das differenzcodierte Aktualisierungsmanifest auf unveränderte Zweige der Hierarchie des ursprünglichen Manifests verweist.

7. System (1000) nach Anspruch 3, wobei die Aktualisierungsstandard-CCN-Inhaltsobjekte Änderungen umfassen, die an dem Inhaltselement und den entsprechenden Byte-Orten der Änderungen innerhalb des Inhaltselements vorgenommen werden.

8. System (1000) nach Anspruch 3, wobei die Aktualisierungsstandard-CCN-Inhaltsobjekte einen Satz modifizierter Standard-CCN-Inhaltsobjekte und entsprechende Sequenznummern der modifizierten Standard-CCN-Inhaltsobjekte innerhalb des Satzes von Standard-CCN-Inhaltsobjekten umfassen, die dem Inhaltselement entsprechen.

9. System (1000) nach Anspruch 3, wobei mindestens ein Inhaltsobjekt in dem einzelnen Inhaltsstrom Schlüsselinformationen umfasst und wobei ein entsprechendes Inhaltsobjekt eine kryptographische Signatur umfasst, die dem Schlüssel zugeordnet ist.

10. Verfahren nach Anspruch 1, das ferner einen Anforderer umfasst, der das Aktualisierungsmanifest und die Aktualisierungsstandard-CCN-Inhaltsobjekte abruft und das aktualisierte Inhaltselement mit Hilfe des Aktualisierungsmanifests und eines Satzes von Aktualisierungsstandard-CCN-Inhaltsobjekten erstellt.

11. System, das das Computersystem nach Anspruch 3 und einen Anfordererknoten (105) umfasst, der dafür konfiguriert ist, das Aktualisierungsmanifest und den Satz von Aktualisierungsstandard-CCN-Inhaltsobjekten abzurufen, und das aktualisierte Inhaltselement mit Hilfe des Aktualisierungsmanifests und des Satzes von Aktualisierungsstandard-CCN-Inhaltsobjekten zu erstellen.

## Revendications

1. Procédé d'actualisation d'un élément de contenu et de délivrance de l'élément de contenu actualisé sur un réseau axé sur le contenu, CCN, (180), comprenant :
l'actualisation (802) de l'élément de contenu qui correspond à un manifeste d'origine (200) et un ensemble d'objets de contenu CCN standard référencé par le manifeste d'origine ;
la génération (804, 806) d'un manifeste d'actualisation pour l'élément de contenu actualisé, dans lequel le manifeste d'actualisation comporte une référence au manifeste d'origine et une référence à un ensemble d'objets de contenu CCN standard d'actualisation, dans lequel l'ensemble d'objets de contenu CCN standard d'actualisation indique des différences entre l'élément de contenu et l'élément de contenu actualisé ; et
la publication (808) du manifeste d'actualisation et de l'ensemble d'objets de contenu CCN standard d'actualisation en mémorisant le manifeste d'actualisation et l'ensemble d'objets de contenu CCN standard d'actualisation au niveau d'un noeud dans le réseau CCN, permettant ainsi à un demandeur de l'élément de contenu actualisé de recouvrer le manifeste d'actualisation et l'ensemble d'objets de contenu CCN standard d'actualisation et de construire l'élément de contenu actualisé à l'aide du manifeste d'actualisation et de l'ensemble d'objets de contenu CCN standard d'actualisation.

2. Support de mémorisation non transitoire lisible par ordinateur (1030) mémorisant des instructions qui, à leur exécution par un dispositif informatique, amènent le dispositif informatique à exécuter le procédé selon la revendication 1.

3. Système informatique (1000) destiné à l'actualisation d'un élément de contenu et la délivrance de l'élément de contenu actualisé sur un réseau axé sur le contenu, CCN, (180), le système comprenant :
un processeur (1010) ; et
un dispositif de mémorisation (1030) couplé au processeur et mémorisant des instructions qui, à leur exécution par le processeur, amènent le processeur à exécuter un procédé, le procédé comprenant :
l'actualisation (802) de l'élément de contenu qui correspond à un manifeste d'origine (200) et un ensemble d'objets de contenu CCN standard référencé par le manifeste d'origine ;
la génération (804, 806) d'un manifeste d'actualisation pour l'élément de contenu actualisé, dans lequel le manifeste d'actualisation comporte une référence au manifeste d'origine et une référence à un ensemble d'objets de contenu CCN standard d'actualisation, dans lequel l'ensemble d'objets de contenu CCN standard d'actualisation indique des différences entre l'élément de contenu et l'élément de contenu actualisé ; et
la publication (808) du manifeste d'actualisation et de l'ensemble d'objets de contenu CCN standard d'actualisation en mémorisant le manifeste d'actualisation et l'ensemble d'objets de contenu CCN standard d'actualisation au niveau d'un noeud dans le réseau CCN, permettant ainsi à un demandeur de l'élément de contenu actualisé de recouvrer le manifeste d'actualisation et l'ensemble d'objets de contenu CCN standard d'actualisation et de construire l'élément de contenu actualisé à l'aide du manifeste d'actualisation et de l'ensemble d'objets de contenu CCN standard d'actualisation.

4. Système (1000) selon la revendication 3, dans lequel le manifeste d'origine (200) fait référence à l'ensemble d'objets de contenu CCN standard par leur nom de hachage.

5. Système (1000) selon la revendication 4, dans lequel le manifeste d'actualisation est codé par différence, indiquant une différence par rapport au manifeste d'origine (200) afin de construire un manifeste plus récent qui fait référence, par les noms de hachage, à un ensemble d'objets de contenu correspondant à l'élément du contenu actualisé.

6. Système (1000) selon la revendication 5, dans lequel le manifeste d'origine (200) est hiérarchique, et dans lequel le manifeste d'actualisation codé par différence fait référence à des branches non modifiées de la hiérarchie du manifeste d'origine.

7. Système (1000) selon la revendication 3, dans lequel les objets de contenu CCN standard d'actualisation comportent des changements apportés à l'élément de contenu et des emplacements d'octets correspondants des changements dans l'élément de contenu.

8. Système (1000) selon la revendication 3, dans lequel les objets de contenu CCN standard d'actualisation comportent un ensemble d'objets de contenu CCN standard modifiés et des numéros de séquence correspondants des objets de contenu CCN standard modifiés dans l'ensemble d'objets de contenu CCN standard correspondant à l'élément de contenu.

9. Système (1000) selon la revendication 3, dans lequel au moins un objet de contenu dans le flux de contenu unique comporte des informations de clé, et dans lequel un objet de contenu respectif comporte une signature cryptographique associée à la clé.

10. Procédé selon la revendication 1 en comprenant en outre un demandeur qui recouvre le manifeste d'actualisation et les objets de contenu CCN standard d'actualisation et construit l'élément de contenu actualisé à l'aide du manifeste d'actualisation et d'un ensemble d'objets de contenu CCN standard d'actualisation.

11. Système comprenant le système informatique selon la revendication 3 et un noeud demandeur (105) configuré pour recouvrer le manifeste d'actualisation et les objets de contenu CCN standard d'actualisation et construire l'élément de contenu actualisé à l'aide du manifeste d'actualisation et de l'ensemble d'objets de contenu CCN standard d'actualisation.
